# EUROPEAN PATENT APPLICATION

(11) **EP 0 900 959 A2**
(43) Date of publication of application: **10.03.1999**
(21) Application number: 98307037.6
(22) Date of filing: 02.09.1998
(51) Int. Cl.: F16J 15/34

(54) **Mechanical face seals**

(30) Priority: 06.09.1997 GB 9718846
(71) Applicant: JOHN CRANE UK LIMITED, Slough, Berkshire SL1 4QX (GB)
(72) Inventor: Goldswain, Ian Martyn, Holyport, Maidenhead SL6 2YW (GB); Roberts, Lev Uryevich, Staines, Middlesex TW19 6AX (GB)
(74) Representative: Watts, Peter Graham

(57) **Abstract**

A non-contacting gas seal includes a pair of sealing rings each defining one of a pair of opposed sealing faces, grooves being provided in one of the sealing faces to create a cushion of gas between the sealing faces as one ring rotates relative to the other, at least one of the rings being formed from a silicon carbide-graphite composite material.

## Description

The present invention relates to mechanical face seals and in particular to non-contacting gas seals in which grooves are provided in one of a pair of sealing faces, to generate a cushion of gas between the sealing faces when one sealing face rotates relative to the other.

Hitherto in mechanical face seals of this type, one sealing ring has been made of a metal impregnated carbon-graphite material which runs against a ring made of tungsten carbide or silicon carbide. The advantage of both of these material pairs is that the metal impregnated carbon-graphite material gives exceptionally good dry friction properties which permits the sealing face of one ring to rotate in contact with that of the other at start up and shut down, when the speed of rotation is not sufficient to cause one sealing face to lift away from the other.

Furthermore, the toroidal rotation of the sealing face of the metal impregnated sealing ring, due to both pressure and thermal distortion, can be computed and easily adjusted by a suitable design of the ring, to give the optimum convergent angle across the sealing faces, under normal operation of the seal.

The metal impregnated carbon-graphite material used hitherto has a modulus of elasticity in the range 24 to 33 GPa. As a consequence, rings made of this material exhibit a high level or radial deflection with applied external pressure. The performance of such rings may consequently be adversely affected to a significant degree, at external pressures above 100 bar.

For higher pressure seals, it has consequently been proposed to substitute silicon carbide for the metal impregnated carbon-graphite rings used hitherto. Silicon carbide has a modulus of elasticity of the order of 410 GPa which will consequently be relatively insensitive to external pressure. However, silicon carbide when run against mating rings of silicon carbide or tungsten carbide, has very poor dry friction properties, as a result of which a very small amount of debris will quickly cause damage to the sealing faces, during start up and shut down.

In order to reduce this problem, coatings of low friction material, for example graphite, have been applied to the sealing faces of one or both rings. However, tests demonstrate that even a small amount of rubbing, as experienced upon start up and shut down of the seal, can cause spalling of the coating and lead to failure of the seal.

Furthermore, with materials of such high modulus of elasticity, the cross-section becomes so torroidally stiff that a large portion of the material towards the outer diameter of the face needs to be removed, to promote bending and achieve adequate control of the seal face convergence and hence the seal leakage. Apart from making the seal face rather axially thin and susceptible to secondary damage, the level of material removal would also make the component expensive to produce.

In accordance with the present invention a non-contacting gas seal comprises a pair of seal rings, the seal rings defining a pair of opposed sealing faces, grooves being provided in one of the sealing faces to create a cushion of gas between the sealing faces, when one ring rotates relative to the other, characterised in that at least one of said sealing rings is formed from a silicon carbide-graphite composite material.

Preferably the silicon carbide-graphite composite material of the present invention contains between 10 and 40% graphite which is disposed substantially homogeneously throughout the structure. The material may comprise either a reaction bonded silicon carbide or a self sintered silicon carbide.

The silicon carbide-graphite composite material may be manufactured from a porous graphite blank which is impregnated with molten silicon in a furnace. The silicon infiltrates the pores of the graphite blank and reacts partially therewith, to form silicon carbide. The blank is left in the furnace for sufficient time until the original pores are filled with silicon carbide. The resulting microstructure consists of graphite particles surrounded by silicon carbide and a small amount of unreacted silicon. The proportions of the relevant phases will be dependent on the porosity of the starting graphite blank.

Alternatively, silicon carbide grains and graphite particles may be mixed and compacted, for example by pressing, into a component shape. The component shape is then placed into a furnace together with lumps of silicon. The furnace is heated to above the melting point of silicon which soaks into the silicon carbide-graphite compact by capillary action and reacts partially with the graphite to form silicon carbide. Residual silicon metal fills any pores. The resulting microstructure consists of silicon carbide, residual silicon and graphite particles. The size and amount of the free graphite phase present will be dependent on the size and amounts of the starting particles and on the reaction time.

In a further alternative, a mixture of silicon carbide powder, sinter aids, for example boron or aluminium, and graphite particles are mixed and compacted into a component shape. The compact is heated in a furnace to cause the silicon carbide grains to sinter or bond themselves together. The resulting microstructure consists of self sintered silicon carbide with particles of free graphite. Again the size and amount of free graphite will depend upon the starting mix.

The silicon carbide-graphite composite materials used in the present invention have a modulus of elasticity of between 120 and 320 GPa, depending upon the level of graphite. This gives a good balance of properties. The modulus is sufficiently high to reduce the radial deflections to the point where they have an insignificant affect on the seal performance but the seal rings may be designed to achieve adequate control on the seal face convergence, without resorting to thin cross-sections.

The traditional metal impregnated carbon-graphite faces will experience considerable distortion at pressures above 100 bar and under slight variations in the supply pressure at this condition the seal will give very high leakage fluctuations due to the large face distortions. The high modulus of the silicon carbide-graphite composite material gives neglible face distortion resulting in the elimination of leakage fluctuations at these high pressures.

The thermal conductivity of the material also has a significant affect on the performance of the seal. If a material with low conductivity is used, then a high level of thermal rotation will result. This is particularly important at low pressure, high speed conditions where the heat generated between the sealing faces is not balanced by the cooling effect of the gas expansion across the sealing faces. Additionally, at low pressure condition, the heat transferred between the gas and the seal face is poor. As a consequence, the seal interface temperatures are typically 50°C above the ambient gas temperature and for materials of low conductivity, there is a significant differential temperature between the front and back of the sealing face. This temperature differential will result in a high level of coning on the sealing face. At very high speed conditions, this can have an adverse affect on the fluid film and eventually result in the sealing faces contacting one another. The metal loaded carbon graphite material conventionally used suffers in this way. The composite materials according to the present invention have high thermal conductivity and consequently the coning affect due to thermal distortion is virtually eliminated.

The consequence of the combination of the high thermal conductivity and the high elastic modulus of the silicon carbide-graphite composite material is to give a seal which does not suffer from excessive thermal rotation and pressure caused distortion thus allowing the seal to operate with much smaller film thickness under static and dynamic conditions. The minimum film thickness can be reduced by 20 to 50% when compared to the traditional metal impregnated carbon-graphite under the same operating conditions, with no risk of contact occurring.

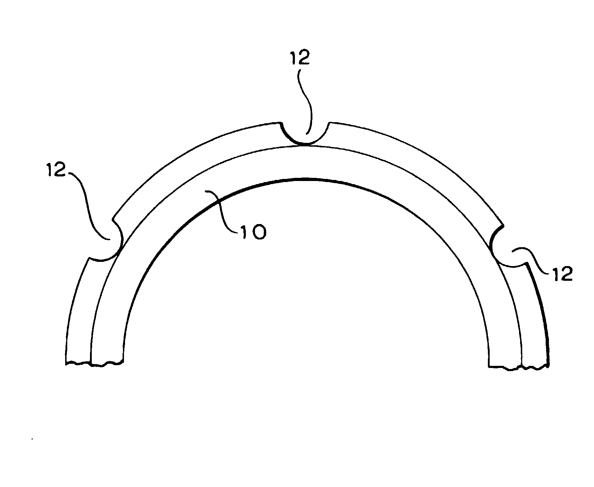

The consequence of having this reduced film thickness, and the whole objective of reducing the film thickness, is to give lower seal leakage. For example, a seal of 173 mm balance diameter rotating at 6000 rpm with a pressure of 200 bar and temperature of 180°C will have leakage values between 95 and 130 l/min. This compares with a seal using the traditional metal impregnated carbon-graphite under these same operating conditions having leakage figures 50-70% more.

The silicon carbide-graphite composite materials of the present invention have excellent dry friction properties. The graphite in the composite material provides an adequate level of lubrication to accommodate rubbing of the surfaces at start up and shut down. In this respect, the composite material of the present invention demonstrates a superior level of performance compared to either silicon carbide or metal impregnated carbon-graphite. When subjected to a typical 2000 cycle stop/start testing regime no measurable degradation to either of the running faces was observed in such tests.

In mechanical face seals of this type, one of the sealing rings is normally fixed axially and rotationally with respect to one component. The other ring is mounted in fixed rotational relationship but movable axially of a second component. As illustrated in the accompanying drawing which shows a part end elevation of an axially movable sealing ring 10, a series of arcuate slots 12 are provided around the outer periphery of the sealing ring 10. Ribs of corresponding section (not shown) on the component associated with the ring 10, engage the slots 12, to react rotational forces whilst permitting axial movement of the ring 10 relative to the associated component. Normally three or four slots are required to transmit drive between the ring 10 and associated component. However, when the slots 12 are machined into the ring, distortion or waviness is created around the area of the slots 12. This distortion of waviness may be reduced by increasing the number of slots 12. Typically, for a metal impregnated carbon-graphite ring, 24 equiangularly spaced slots 12 are machined in the outer periphery of the seal ring 10 to reduce the distortion or waviness to an insignificant level. Use of a silicon carbide-graphite composite material in accordance with the present invention, has the further advantage that the number of slots 12 may be reduced to 6 to 9 in order to achieve the same level of distortion with subsequent savings in manufacturing costs.

## Claims

1. A non-contacting gas seal comprising a pair of seal rings, the seal rings defining a pair of opposed sealing faces, grooves being provided in one of the sealing faces to create a cushion of gas between the sealing faces when one ring rotates relative to the other, characterised in that at least one of said sealing rings is formed from a silicon carbide-graphite composite material.

2. A seal according to Claim 1 characterised in that the silicon carbide-graphite composite material contains between 10 and 40% graphite.

3. A seal according to Claim 1 or 2 characterised in that the graphite is disposed substantially homogeneously throughout the structure.

4. A seal according to any one of the preceding claims characterised in that the silicon carbide-graphite composite material comprises a reaction bonded silicon carbide or a self sintered silicon carbide.

5. A seal according to any one of the preceding claims characterised in that the sealing ring formed from silicon carbide-graphite composite material.is made from a porous graphite blank which is impregnated with molten silicon so that the silicon infiltrates the pores of the graphite blank and reacts partially therewith, to form silicon carbide.

6. A seal according to any one of Claims 1 to 4 characterised in that the sealing ring formed from silicon carbide-graphite composite material is made from silicon carbide grains and graphite particles which are mixed and compacted into the form of the sealing ring, the compact being heated with molten silicon so that the silicon soaks into the silicon carbide-graphite compact by capillary action and reacts partially with the graphite to form silicon carbide.

7. A seal according to any one of Claims 1 to 4 characterised in that the sealing ring formed from silicon carbide-graphite composite material is made from a mixture of silicon carbide powder, sinter aids and graphite particles are mixed and compacted into the shape of the sealing ring, the compact then being heated in a furnace to cause the silicon carbide grains to sinter or bond themselves together.

8. A seal according to any one of the sealing claims characterised in that the silicon carbide-graphite composite material has a modulus of elasticity of between 120 and 320 GPa.

9. A seal according to any one of the preceding claims characterised in that said other sealing ring is formed from silicon carbide or tungsten carbide.
